# EUROPÄISCHE PATENTANMELDUNG

(11) **EP 3 263 998 A1**
(43) Veröffentlichungstag der Anmeldung: **03.01.2018**
(21) Anmeldenummer: 17175424.5
(22) Anmeldetag: 12.06.2017
(51) Int. Cl.: F24F 7/08, F24F 11/00

(54) **VERFAHREN ZUM BETRIEB EINER LÜFTUNGSVORRICHTUNG UND LÜFTUNGSVORRICHTUNG ZUR BELÜFTUNG MINDESTENS EINES RAUMS**

(30) Priorität: 30.06.2016 DE 102016111945
(71) Anmelder: REHAU AG + Co, 95111 Rehau (DE)
(72) Erfinder: Bauer, Ralf, 90768 Fürth (DE); Schork, Rainer, 91330 Bammersdorf (DE)

(57) **Zusammenfassung**

Die vorliegende Erfindung bezieht sich auf ein Verfahren zum Betrieb einer Belüftungsvorrichtung (1) mit mindestens einem ersten Lüftungskanal (12, 12'), in dem mindestens ein erstes Lüftungselement (20', 30') angeordnet ist und in dem mindestens ein erster Wärmetauscher (21, 31) zumindest teilweise angeordnet ist, und mindestens einem zweiten Lüftungskanal (13, 13'), in dem mindestens ein zweites Lüftungselement (20, 30) angeordnet ist, und in dem mindestens ein zweiter Wärmetauscher (21, 31) zumindest teilweise angeordnet ist, wobei der mindestens eine erste Lüftungskanal (12, 12') und der mindestens eine zweite Lüftungskanal (13, 13') jeweils dazu ausgebildet sind, einen Luftaustausch zwischen dem Raum und einer äußeren Umgebung vorzunehmen, wobei mindestens eines der ersten Lüftungselemente (20', 30') derart betrieben wird, dass Luft aus dem Raum durch mindestens einen der ersten Lüftungskanäle (12, 12') unter Passieren des mindestens einen ersten Wärmetauschers (21, 31) in die äußere Umgebung transferiert wird, während gleichzeitig mindestens eines der zweiten Lüftungselemente (20, 30) derart betrieben wird, dass Luft aus der äußeren Umgebung durch den mindestens einen zweiten Lüftungskanal (13, 13') unter Passieren des mindestens einen zweiten Wärmetauschers (20, 30) in den Raum transferiert wird, wodurch eine Absenkung einer Raumtemperatur des Raums bewirkt wird, oder mindestens eines der zweiten Lüftungselemente (20, 30) derart betrieben wird, dass Luft aus dem Raum durch mindestens einen der zweiten Lüftungskanäle (13, 13') unter Passieren des mindestens einen zweiten Wärmetauschers (21, 31) in die äußere Umgebung transferiert wird, während gleichzeitig mindestens eines der ersten Lüftungselemente (20', 30') derart betrieben wird, dass Luft aus der äußeren Umgebung durch den mindestens einen ersten Lüftungskanal (12, 12') unter Passieren des mindestens einen ersten Wärmetauschers (21, 31) in den Raum transferiert wird, wodurch eine Absenkung einer Raumtemperatur des Raums bewirkt wird. Darüber hinaus bezieht sich die vorliegende Erfindung auf eine Belüftungsvorrichtung zur Belüftung mindestens eines Raums, die zur Durchführung des erfindungsgemäßen Verfahrens ausgebildet ist.

## Beschreibung

Die vorliegende Erfindung betrifft ein Verfahren zum Betrieb einer Lüftungsvorrichtung mit mindestens einem ersten Lüftungskanal, mindestens einem in dem mindestens einen ersten Lüftungskanal angeordneten ersten Lüftungselement, mindestens einem in dem mindestens einen ersten Lüftungskanal angeordneten, ersten Wärmetauscher, mindestens einem zweiten Lüftungskanal, mindestens einem in dem mindestens einen zweiten Lüftungskanal angeordneten zweiten Lüftungselement und mindestens einem in dem mindestens einen zweiten Lüftungskanal angeordneten, zweiten Wärmetauscher, wobei der erste Lüftungskanal und der zweite Lüftungskanal jeweils dazu ausgebildet sind, einen Luftaustausch zwischen dem Raum und einer äußeren Umgebung vorzunehmen. Darüber hinaus betrifft die vorliegende Erfindung auch eine Lüftungsvorrichtung zur einer Belüftung mindestens eines Raums, die mindestens einen ersten Lüftungskanal, mindestens einen in dem mindestens einen ersten Lüftungskanal angeordneten ersten Lüftungselement, mindestens einen in dem mindestens einen ersten Lüftungskanal angeordneten, ersten Wärmetauscher, mindestens einen zweiten Lüftungskanal, mindestens einen in dem mindestens einen zweiten Lüftungskanal angeordneten zweiten Lüftungselement, mindestens einen in dem mindestens einen zweiten Lüftungskanal angeordneten, zweiten Wärmetauscher, sowie ein Steuerelement umfasst.

Derartige Lüftungsvorrichtungen und entsprechende Steuerverfahren dafür sind aus dem Stand der Technik bekannt. Beispielsweise beschriebt die DE 10 2014 108 852 A1 eine derartige Lüftungsvorrichtung mit mindestens einem ersten und mindestens einem zweiten Lüftungskanal, in denen jeweils mindestens ein Lüftungselement angeordnet ist, wobei die Lüftungsvorrichtung ein Steuerelement umfasst, durch das die Lüftungselemente in dem mindestens einen ersten und mindestens einen zweiten Lüftungskanal wechselweise in einen aktiven Betriebszustand oder in einen passiven Betriebszustand geschaltet werden können. Dadurch soll eine Verbesserung hinsichtlich der Energieeffizienz erzielt werden. Dieses abwechselnde Betreiben der Lüftungselemente in den einzelnen Lüftungskanälen, das eine passive Zufuhr von Außenluft in den Raum im passiven Betriebszustand beinhaltet, erlaubt es jedoch, eine Außenluft mit einer Temperatur unterhalb der Raumtemperatur, beispielsweise in Sommernächten, zum Abkühlen des mindestens einen Raums zu nutzen.

Dementsprechend liegt die Aufgabe der vorliegenden Erfindung in der Bereitstellung eines Verfahrens zum Betrieb einer Lüftungsvorrichtung sowie einer entsprechenden Lüftungsvorrichtung, die ein effektives Abkühlen des belüfteten Raums/der belüfteten Räume ermöglicht, wenn die Außentemperatur die Raumtemperatur unterschreitet, was beispielsweise in Sommernächten der Fall ist.

Diese und andere Aufgaben werden erfindungsgemäß durch ein Verfahren mit den Merkmalen des Anspruchs 1 bzw. durch eine Lüftungsvorrichtung mit den Merkmalen des Anspruchs 6 gelöst. Bevorzugte Ausführungsformen des erfindungsgemäßen Verfahrens bzw. der erfindungsgemäßen Lüftungsvorrichtung sind in den davon jeweils abhängigen Ansprüchen beschrieben.

Gemäß der vorliegenden Erfindung wurde erkannt, dass eine aktuelle Temperatur der Außenluft unterhalb der Raumtemperatur zum Abkühlen des belüfteten Raums/der belüfteten Räume effektiv genutzt werden kann, wenn einer der Lüftungskanäle so betrieben wird, dass Außenluft durch diesen Lüftungskanal unter Passieren des in diesem Lüftungskanal angeordneten Wärmetauschers in den Raum gefördert wird, während gleichzeitig durch den anderen Lüftungskanal unter Passieren des in diesem Lüftungskanal angeordneten Wärmetauschers Luft aus dem Inneren des Raums/der Räume nach außen gefördert wird. Bei der Verwendung eines üblichen Wärmetauschers gibt die warme Raumluft einen Teil der darin gespeicherten Wärme an den Wärmetauscher ab, der diese Wärmeenergie speichert. Dadurch, dass an die Wärmetauscher permanent warme Raumluft nachgefördert wird, bleibt die im Wärmetauscher gespeicherte Energie im Wärmetauscher. Umgekehrt wird durch den anderen Wärmetauscher kühlere Außenluft in den Raum gefördert. Dabei passiert die kühlere Außenluft den in diesem Lüftungskanal angeordneten Wärmetauscher, der nach einer Einführungsphase, in der der Wärmetauscher noch Energie an die Luft in diesem Lüftungskanal abgibt, keine Wärme mehr an die diesen Wärmetauscher passierende Luft abgibt. Bei Einsatz eines Wärmerekuperators, bei dem im regulären Betrieb warme und kalte Luft unter Austausch von Wärmeenergie durch ein wärmeleitfähiges Material voneinander getrennt aneinander vorbeigeführt werden, wodurch der Wärmeaustausch zwischen den Luftströmen erfolgt, wird durch einen Lüftungskanal warme Raumluft nach außen gefördert, während durch den anderen Lüftungskanal kühlere Außenluft in das Rauminnere gefördert wird, ohne dass diese kühlere Außenluft durch Wärmeaustausch im Rekuperator erwärmt wird. Auf beide Arten wird ein effektives Abkühlen des belüfteten Raums/der belüfteten Räume erzielt.

Dementsprechend liegt die vorliegende Erfindung in der Bereitstellung eines Verfahrens zum Betrieb einer Lüftungsvorrichtung mit mindestens einem ersten Lüftungskanal, in dem mindestens ein erstes Lüftungselement angeordnet ist und in dem mindestens ein erster Wärmetauscher zumindest teilweise angeordnet ist, und mindestens einem zweiten Lüftungskanal, in dem mindestens ein zweites Lüftungselement angeordnet ist und in dem mindestens ein zweiter Wärmetauscher zumindest teilweise angeordnet ist, wobei der mindestens eine erste Lüftungskanal und der mindestens eine zweite Lüftungskanal jeweils dazu ausgebildet sind, einen Luftaustausch zwischen dem Raum und einer äußeren Umgebung vorzunehmen, wobei mindestens eines der ersten Lüftungselemente derart betrieben wird, dass Luft aus dem Raum durch den mindestens einen ersten Lüftungskanal unter Passieren des mindestens einen ersten Wärmetauschers in die äußere Umgebung transferiert wird, während gleichzeitig mindestens eines der zweiten Lüftungselemente derart betrieben wird, dass Luft aus der äußeren Umgebung durch den mindestens einen zweiten Lüftungskanal unter Passieren des mindestens einen zweiten Wärmetauschers in den Raum transferiert wird, wodurch eine Absenkung einer Raumtemperatur des Raums bewirkt wird oder mindestens eines der zweiten Lüftungselemente derart betrieben wird, dass Luft aus dem Raum durch den mindestens einen zweiten Lüftungskanal unter Passieren des mindestens einen zweiten Wärmetauschers in die äußere Umgebung transferiert wird, während gleichzeitig mindestens eines der ersten Lüftungselemente derart betrieben wird, dass Luft aus der äußeren Umgebung durch den mindestens einen ersten Lüftungskanal unter Passieren des mindestens einen ersten Wärmetauschers in den Raum transferiert wird, wodurch eine Absenkung einer Raumtemperatur des Raums bewirkt wird. Darüber hinaus liegt die vorliegende Erfindung in der Bereitstellung einer Lüftungsvorrichtung zur einer Belüftung mindestens eines Raums, die mindestens einen ersten Lüftungskanal, in dem mindestens ein erstes Lüftungselement angeordnet ist und in dem mindestens ein erster Wärmetauscher zumindest teilweise angeordnet ist, mindestens einen zweiten Lüftungskanal, in dem mindestens ein zweites Lüftungselement angeordnet ist und in dem mindestens ein zweiter Wärmetauscher zumindest teilweise angeordnet ist, sowie ein Steuerelement umfasst, wobei das Steuerelement zumindest dazu vorgesehen ist, mindestens eines der ersten Lüftungselemente derart zu betreiben, dass Luft aus dem Raum durch den mindestens einen ersten Lüftungskanal unter Passieren des mindestens einen ersten Wärmetauschers in die äußere Umgebung transferiert wird, und gleichzeitig mindestens eines der zweiten Lüftungselemente derart zu betreiben wird, dass Luft aus der äußeren Umgebung durch den mindestens einen zweiten Lüftungskanal unter Passieren des mindestens einen zweiten Wärmetauschers in den Raum transferiert wird, um eine Absenkung einer Raumtemperatur des Raums zu bewirken, oder das Steuerelement zumindest dazu vorgesehen ist, mindestens eines der zweiten Lüftungselemente derart zu betreiben, dass Luft aus dem Raum durch den mindestens einen zweiten Lüftungskanal unter Passieren des mindestens einen zweiten Wärmetauschers in die äußere Umgebung transferiert wird, und gleichzeitig mindestens eines der ersten Lüftungselemente derart zu betreiben, dass Luft aus der äußeren Umgebung durch den mindestens einen ersten Lüftungskanal unter Passieren des mindestens einen ersten Wärmetauschers in den Raum transferiert wird, um eine Absenkung einer Raumtemperatur des Raums zu bewirken.

Unter einem "Lüftungskanal" soll, wie hierin verwendet, insbesondere eine durchgehende fluidführende Verbindung verstanden werden, über die ein Luftaustausch zwischen zumindest einem durch Raumwände zumindest im Wesentlichen umschlossenen Raum und einer äußeren Umgebung möglich ist. Vorzugsweise ist ein derartiger Lüftungskanal als eine Ausnehmung und/oder eine Wanddurchdringung insbesondere in einer Raumaußenwand ausgebildet. Besonders bevorzugt sind der mindestens eine erste Lüftungskanal und der mindestens eine zweite Lüftungskanal in Form von Profilhohlkammern von den Fenster- und/oder Türrahmen bildenden Profilen ausgebildet ist.

Die ersten Lüftungselemente und/oder die zweiten Lüftungselemente sind insbesondere dazu ausgestaltet, in einem aktiven Betriebszustand, während dessen ein insbesondere motorischer aktiver Antrieb mindestens eines der ersten Lüftungselemente und/oder mindestens eines der zweiten Lüftungselemente erfolgt, aktiv eine Luftströmung innerhalb des zumindest einen ersten Luftkanals und/oder des zumindest einen zweiten Lüftungskanals zu erzeugen, welche dazu vorgesehen ist, eine warme Raumluft von dem zumindest einen Raum in die äußere Umgebung auszuleiten bzw. eine kühlere Außenluft aus der äußeren Umgebung in den zu belüftenden Raums/die zu belüftenden Räume einzuleiten.

Die ersten Lüftungselemente und/oder die zweiten Lüftungselemente, besonders bevorzugt alle Lüftungselemente der erfindungsgemäßen Lüftungsvorrichtung, werden insbesondere von einem Steuerelement vorzugsweise synchron angesteuert. Unter einem "Steuerelement" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Wie hierin verwendet soll der Begriff "vorgesehen" insbesondere bedeuten, dass das betreffende Objekt derart programmiert, ausgelegt, angeordnet und/oder ausgestattet ist, eine bestimmte Funktion in zumindest einem Anwendungs- und/oder Betriebszustand zu erfüllen und/oder auszuführen.

Erfindungsgemäß ist das Steuerelement zumindest dazu vorgesehen, mindestens ein erstes Lüftungselement derart zu betreiben, dass Luft aus dem Raum durch den mindestens einen ersten Lüftungskanal unter Passieren des mindestens einen ersten Wärmetauschers in die äußere Umgebung transferiert wird, und gleichzeitig mindestens ein zweites Lüftungselement derart zu betreiben wird, dass Luft aus der äußeren Umgebung durch den mindestens einen zweiten Lüftungskanal unter Passieren des mindestens einen zweiten Wärmetauschers in den Raum transferiert wird, um eine Absenkung einer Raumtemperatur des Raums zu bewirken, oder mindestens ein zweites Lüftungselement derart zu betreiben, dass Luft aus dem Raum durch den mindestens einen zweiten Lüftungskanal unter Passieren des mindestens einen zweiten Wärmetauschers in die äußere Umgebung transferiert wird, und gleichzeitig mindestens ein erstes Lüftungselement derart zu betreiben, dass Luft aus der äußeren Umgebung durch den mindestens einen ersten Lüftungskanal unter Passieren des mindestens einen ersten Wärmetauschers in den Raum transferiert wird, um eine Absenkung einer Raumtemperatur des Raums zu bewirken. Insbesondere wird in einem Betriebszustand eine Raumluft über den mindestens einen ersten Lüftungskanal in die äußere Umgebung mittels mindestens eines der ersten Lüftungselemente aktiv ausgeleitet. Gleichzeitig wird über den mindesten einen zweiten Lüftungskanal mittels mindestens eines der zweiten Lüftungselemente aktiv eine Umgebungsluft in den mindestens einen Raum eingeleitet. In einem alternativen Betriebszustand ist das Steuerelement vorzugsweise mindestens dazu vorgesehen, eine Raumluft über den mindestens einen zweiten Lüftungskanal in die äußere Umgebung mittels mindestens eines der zweiten Lüftungselemente aktiv auszuleiten, während gleichzeitig über den mindestens einen ersten Lüftungskanal aktiv mittels mindestens eines der ersten Lüftungselemente eine Umgebungsluft in den mindestens einen Raum eingeleitet.

Durch einen derartigen Betrieb kann eine Lüftungsvorrichtung vorteilhaft eingesetzt werden. Insbesondere kann durch Schalten mindestens eines der ersten oder zweiten Lüftungselemente im Sinne einer Raumentlüftung und gleichzeitiges Schalten mindestens eines der zweiten oder ersten Lüftungselemente im Sinne einer Raumbelüftung bei niedriger Außentemperatur ein effektives Kühlen des Raums erreicht werden.

In bevorzugten Ausführungsformen kann die erfindungsgemäße Belüftungsvorrichtung weiter eine Sensoreinheit umfassen, die mindestens dazu vorgesehen ist, mindestens einen Klimakennwert einer Umgebungsluft und/oder einer Raumluft zu erfassen, der von der Steuer- und/oder Regeleinheit zur Steuerung des ersten und/oder des zweiten Lüftungselements nutzbar ist. Unter dem Begriff "Sensoreinheit", wie er hierin verwendet wird, ist insbesondere eine Einheit zu verstehen, die dazu ausgebildet ist, insbesondere physikalische und/oder chemische Eigenschaften und/oder die stoffliche Beschaffenheit ihrer Umgebung qualitativ und/oder als Messgröße quantitativ zu erfassen. Unter dem Begriff "Klimakennwert", wie er hierin verwendet wird, ist insbesondere ein Kennwert zu verstehen, der mindestens eine Information über das Raumklima und/oder das Umgebungsklima umfasst oder Hinweise darauf bietet. Beispielweise umfasst der zumindest eine Klimakennwert eine Information über die relative Feuchte und/oder die Temperatur und/oder den Druck der Raumluft und/oder der Umgebungsluft. Der mindestens eine Klimakennwert wird vorzugsweise zur Speicherung und/oder Auswertung und/oder Weiterverarbeitung an das Steuerelement übermittelt. Zusätzlich kann die mindestens eine Sensoreinheit weitere Kennwerte, beispielsweise den Feuchtigkeitskennwert einer Wand, erfassen und zu den genannten Zwecken an das Steuerelement übermitteln. Auf diese Weise können Kennwerte erfasst werden, was zu einem vorteilhaft zuverlässigen und/oder effektiven und/oder energieeffizienten Betrieb, insbesondere durch eine vorteilhafte Laufzeitreduktion der ersten Lüftungselemente und der zweiten Lüftungselemente der erfindungsgemäßen Belüftungsvorrichtung genutzt werden kann.

In diesem Zusammenhang kann es von Vorteil sein, wenn das Steuerelement mindestens dazu ausgebildet ist, anhand des zumindest einen Klimakennwerts eine relative Luftfeuchtigkeit und/oder einen Taupunkt der Umgebungsluft und/oder der Raumluft zu berechnen. Dies ermöglicht einen Vergleich der Feuchtigkeitseigenschaften der Raumluft mit den Feuchtigkeitseigenschaften der Umgebungsluft, wodurch ein unerwünschter Anstieg der Feuchtigkeit im Raum durch den Betrieb der erfindungsgemäßen Belüftungsvorrichtung vorab verhindert werden kann. Insbesondere kann ein Einführen von mit höherer relativer Luftfeuchtigkeit als die Raumluft vorab ausgeschlossen werden.

In weiteren bevorzugten Ausführungsformen der vorliegenden Erfindung ist das Steuerelement zumindest dazu vorgesehen ist, die ersten Lüftungselemente und/oder die zweiten Lüftungselemente bevorzugt jeweils einzeln und unabhängig voneinander in Abhängigkeit von dem zumindest einen Klimakennwert anzusteuern. Besonders bevorzugt wird die ersten Lüftungselemente und/oder die zweiten Lüftungselemente bevorzugt jeweils einzeln und unabhängig voneinander abhängig von der aus dem mindestens einen Klimakennwert berechneten relativen Feuchtigkeit und/oder von dem aus dem mindestens einen Klimakennwert berechneten Taupunkt der Raumluft und/oder der Umgebungsluft angesteuert.

In bevorzugten Ausführungsformen kann die erfindungsgemäße Belüftungsvorrichtung weiter mindestens einen Datenspeicher umfassen, durch den der mindestens eine Klimakennwert der Umgebungsluft und/oder der Raumluft und/oder mindestens ein Betriebsparameter erfasst und/oder gespeichert werden kann. Unter dem Begriff "Betriebsparameter", wie er hierin verwendet wird, ist insbesondere ein Parameter zu verstehen, der insbesondere eine Information über eine Funktion und/oder über eine Betriebsdauer der Belüftungsvorrichtung und/oder einer Komponente der Belüftungsvorrichtung umfasst. Insbesondere umfasst der mindestens eine Betriebsparameter eine Information über eine Laufzeit der ersten Lüftungselemente und/oder der zweiten Lüftungselemente. Insbesondere kann der mindestens eine Datenspeicher drahtgebunden und/oder bevorzugt drahtlos mit einer Vielzahl von Sensoren, vorzugsweise Sensoren der Sensoreinheit, gekoppelt sein. Der Datenspeicher kann vorzugsweise gespeicherte Klimakennwerte und/oder Betriebsparameter drahtlos und/oder drahtgebunden zu einer Auswertung und/oder Weiterverarbeitung an eine externe Datenverarbeitungseinheit, beispielsweise einen PC und/oder einen Laptop und/oder ein Smartphone und/oder ein Tablet transferieren. Auf diese Weise kann das effektive Betreiben der erfindungsgemäßen Belüftungsvorrichtung bequem überwacht und/oder überprüft werden.

Es kann auch von Nutzen sein, wenn der mindestens eine erste Wärmetauscher und/oder der mindestens eine zweite Wärmetauscher als Gegenstromwärmeaustauscher oder Wärmerekuperatoren ausgebildet sind/ist. Der Einsatz von Wärmerekuperatoren als erste und/oder der zweite Wärmetauscher ist in der erfindungsgemäßen Belüftungsvorrichtung ohne Umleiten und/oder Sperren von Luftströmen möglich. In diesem Fall fungiert der Gegenstromwärmeaustauscher oder der Wärmerekuperator gleichzeitig als erster Wärmetauscher und zweiter Wärmetauscher. Der Gegenstromwärmeaustauscher oder der Wärmerekuperator kann dann auch teilweise in einem ersten Lüftungskanal und gleichzeitig teilweise in einem zweiten Lüftungskanal angeordnet sein bzw. jeweils einen Teil des entsprechenden Lüftungskanals bilden.

Zusätzlich oder alternativ dazu kann es bevorzugt sein, wenn die Lüftungsvorrichtung in einen Fenster- und/oder Türrahmen integriert ist. Auf diese Weise können der mindestens eine erste Lüftungskanal und mindestens eine zweite Lüftungskanal raumsparend und ästhetisch hochwertig in den Holmen des Fenster- und/oder Türrahmens vorgesehen werden. Dabei kann es besonders bevorzugt sein, wenn der mindestens eine erste Lüftungskanal und der mindestens eine zweite Lüftungskanal in Form von Profilhohlkammern von den Fenster- und/oder Türrahmen bildenden Profilen ausgebildet ist. Derartige Profile für Fenster- und/oder Türrahmen zur Aufnahme einer erfindungsgemäßen Belüftungsvorrichtung sind in der EP 2 813 657 A1 beschrieben, auf die hinsichtlich des Aufbaus einer erfindungsgemäßen Belüftungsvorrichtung und deren Integration und Einbau in einen Fenster- und/oder Türrahmen hiermit explizit Bezug genommen wird. Insbesondere kann es sich bei den Fenster- und/oder Türrahmen bildenden Profilen um entsprechende Kunststoffprofile handeln. In der Praxis hat es sich als besonders günstig erwiesen, wenn es sich bei den entsprechenden Kunststoffprofilen um Blendrahmenprofile und/oder Zargenprofile handelt. Aufgrund ihrer Größe sind Blendrahmenprofile und Zargenprofile zur Aufnahme von elektrischen Geräten wie beispielsweise einer erfindungsgemäßen Belüftungsvorrichtung sowie einer dazu erforderlich Verkabelung besonders geeignet. Es kann sich auch als vorteilhaft erweisen, wenn das erfindungsgemäße Kunststoffprofil zumindest teilweise faserverstärkt ausgebildet ist. Derartige faserverstärkte Kunststoffprofile ermöglichen es, die sonst in die Haupthohlkammer der Kunststoffprofile einzuführende Armierung beispielsweise aus Stahl wegzulassen. Dadurch steht einem ggf. in das Kunststoffprofil zu integrierenden Elektrogerät, wie beispielsweise einem Lüftungssystem, mehr Raum zur Verfügung. Hinsichtlich Details zum Aufbau und zur Herstellung eines derartigen zumindest teilweise faserverstärktem Kunststoffprofils wird auf die WO 2009/024264 A1 verwiesen. Es hat sich als besonders günstig erwiesen, wenn das erfindungsgemäße Kunststoffprofil ein Kernprofil aus faserverstärktem Kunststoff, insbesondere glasfaserverstärktem Polyvinylchlorid (PVC), und ein damit verbundenes Mantelprofil aus nicht faserverstärktem Kunststoff, insbesondere aus unverstärktem Hart-PVC (PVC-U), umfasst.

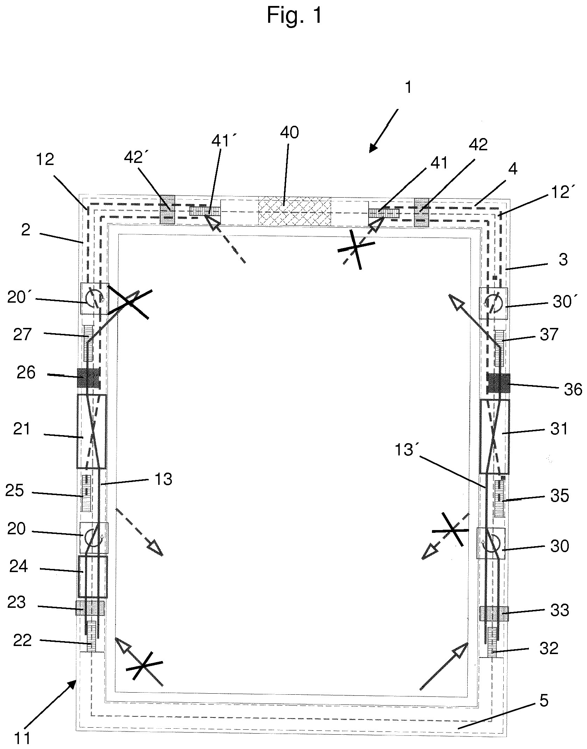

Das erfindungsgemäße Verfahren sowie die erfindungsgemäße Belüftungsvorrichtung sollen nicht auf die oben beschriebene Anwendungen und Ausführungsformen beschränkt sein. Insbesondere kann die erfindungsgemäße Belüftungsvorrichtung eine von einer hierin genannten Anzahl von einzelnen Elementen, Bauteilen und Einheiten abweichende Anzahl umfassen. Im Folgenden soll die Erfindung anhand des in der Figur dargestellten, nicht einschränkenden Ausführungsbeispiels näher beschrieben werden. Dabei zeigt
- Fig. 1: eine schematische Darstellung einer als Blendrahmen ausgebildeten Fenster-Rahmenbaugruppe mit darin integrierter Belüftungsvorrichtung gemäß einer Ausführungsform der vorliegenden Erfindung.

In Fig. 1 ist exemplarisch der Aufbau einer erfindungsgemäßen Belüftungsvorrichtung 1 schematisch dargestellt. Dabei ist die erfindungsgemäße Belüftungsvorrichtung 1 in eine Fenster-Rahmenbaugruppe 11 eingebaut. Die Fenster-Rahmenbaugruppe 11 ist aus vier in den Ecken verschweißten Holmen 2, 3, 4, 5 eines Kunststoffhohlkammerprofils zusammengesetzt. Dabei ist es bevorzugt, das Verschweißen der auf Gehrung geschnittenen Profilholme 2, 3, 4, 5 derart auszuführen, dass die Hohlkammern der einzelnen Profile umlaufend ausgeführt sind. Zumindest sollen die für die Luftführung der erfindungsgemäßen Belüftungsvorrichtung 1 erforderlichen Profilholme 2, 3, 4 derart miteinander verschweißt sein, dass die Hohlkammern der miteinander verschweißten linken, rechten und oberen Profilholme 2, 3, 4 in diesen Bereichen durchgängig sind.

Dabei sind der linke Holm 2 und der rechte Holm 3 annähernd identisch zueinander ausgeführt. Exemplarisch umfasst der linke Holm 2 der Rahmenbaugruppe 11 zwei vorzugsweise als Radiallüfter ausgebildete Lüftungselemente 20, 20', wobei das Lüftungselement 20 ein erstes Lüftungselement darstellt und das Lüftungselement 20' ein zweites Lüftungselement darstellt. Zwischen dem ersten Lüftungselement 20 und dem zweiten Lüftungselement 20' ist ein vorzugsweise als Gegenstrom-Wärmetauscher bzw. Wärmerekuperator ausgebildeter Wärmetauscher 21 angeordnet. Darüber hinaus ist in den linken Profilholm 2 ein Außenluftgitter 22, ein Filter 23, ein Bedien- und Anzeigefeld 24, ein Fortluftgitter 25, eine Klappe 26 sowie ein Zuluftgitter 27 aufgenommen.

Der in Fig. 1 rechts dargestellte Profilholm 3 ist zum linken Profilholm 2 analog, wobei der rechte Profilholm 18 im Gegensatz zum linken Profilholm 17 kein Bedien- und Anzeigefeld aufweist. Der Profilholm 3 umfasst damit zwei vorzugsweise als Radiallüfter ausgebildete Lüftungselemente 30, 30'. Dabei stellt das Lüftungselement 30 ein erstes Lüftungselement darstellt und das Lüftungselement 30' ein zweites Lüftungselement dar. Zwischen den Lüftungselement 30, 30' ist wiederum ein vorzugsweise als Gegenstrom-Wärmetauscher bzw. Wärmerekuperator ausgebildeter Wärmetauscher 31 angeordnet. Weiterhin sind in den Profilholm 3 ein Außenluftgitter 32, ein Filter 33, ein Fortluftgitter 35, eine Klappe 36 und ein Zuluftgitter 37 aufgenommen.

In den oberen Profilholm 4 ist ein Steuerungselement 40 aufgenommen, das etwa mittig im oberen Profilholm 4 angeordnet ist. Das Steuerungselement 40 umfasst dabei auch das Netzgerät der erfindungsgemäßen Belüftungsvorrichtung 1. Dieses ist zur Stromversorgung mit dem Hausstromnetz verbunden. Auf beiden Seiten des Steuerungselements 40 ist in den oberen Holm 40 jeweils ein Abluftgitter 41, 41' und ein Filter 42, 42' integriert. Die Verkabelung der in die Rahmenbaugruppe 11 integrierten erfindungsgemäßen Belüftungsvorrichtung 1 verläuft dabei in einer Hohlkammer des entsprechenden Profilholms 2, 3, 4 des die Rahmenbaugruppe bildenden Kunststoffprofils.

Die in einem Raum vorhandene Luft wird im herkömmlichen Betrieb der erfindungsgemäßen Belüftungsvorrichtung 1 als Abluft über die Abluftgitter 41, 41' des oberen Holms 4 der Rahmenbaugruppe 11 durch die Bewegung der ersten Lüftungselemente 20', 30' durch die Filter 42, 42' gezogen und durch den jeweiligen Wärmetauscher 21, 31 durch die Fortluftgitter 25, 35 nach außen in die Umgebung geführt. Dieser Weg der Luft vom Rauminneren nach außen ist in Fig. 1 schraffiert dargestellt und verläuft über zwei erste Lüftungskanäle 12, 12'. Dabei erstreckt sich der erste Lüftungskanal 12 über Teile des linken Profilholms 2 und des oberen Profilholms 4, während sich der erste Lüftungskanal 12' über Teile des rechten Profilholms 3 und des oberen Profilholms 4 erstreckt.

Dagegen gelangt Außenluft durch die Außenluftgitter 22, 32 in den linken bzw. rechten Profilholm 2, 3, wobei die Luftbewegung wiederum unter Einfluss der ersten Lüftungselemente 20, 30 erfolgt. Von dort wird die Luft durch die Wärmeaustauscher 21, 31 geführt, wo die von außen angesaugte Luft im herkömmlichen Betrieb der erfindungsgemäßen Belüftungsvorrichtung 1 die von der wärmeren Innenluft an die Wärmetauscher 21, 31 abgegebene Energie zumindest teilweise wieder aufnehmen kann. Von dort gelangt die Außenluft als Zuluft durch die Zuluftgitter 27, 37 in das Innere des Raums. Dieser Weg der Außenluft und Zuluft von außen in den Raum ist in Fig. 1 als durchgezogene Linie dargestellt und verläuft über zwei zweite Lüftungskanäle 13, 13'. Dabei erstreckt sich der zweite Lüftungskanal 13 über Teile des linken Profilholms 2, während sich der zweite Lüftungskanal 13' über Teile des rechten Profilholms 3 erstreckt.

Die Messung der Temperatur der Außenluft in der Umgebung des Raums sowie der Luft im Inneren des Raums kann über entsprechende Sensoren (nicht abgebildet) erfolgen, die mit dem Steuerelement 40 der erfindungsgemäßen Belüftungsvorrichtung 1 verbunden sind. Über die Verbindung können Daten von den jeweiligen Sensoren an das Steuerelement 40 übermittelt werden. Diese Übermittlung kann über Kabel oder auch kabellos erfolgen. Gleiches gilt für Sensoren, durch die die Feuchtigkeit der Außenluft in der Umgebung des Raums und/oder der Luft im Inneren des Raums ermittelt werden können.

Ist nun die Temperatur der Außenluft in der Umgebung des Raums niedriger als die Temperatur der Luft im Inneren des Raums kann die erfindungsgemäße Belüftungsvorrichtung 1 zur Raumabkühlung genutzt werden. Um ein Abkühlen der Luft im Inneren des Raums zu bewirken, können nun durch das Steuerelement 40 das zweite Lüftungselement 20 und das erste Lüftungselement 30' abgeschaltet werden. Dann wird die wärmere Luft im Rauminneren durch den Betrieb des ersten Lüftungselemente 20' im ersten Lüftungskanal 12 durch den Filter 42, 42 und durch den Wärmetauscher 21 bewegt und durch das Fortluftgitter 25 nach außen an die Umgebung abgegeben. Da das zweite Lüftungselement 20 im erfindungsgemäßen Betrieb der erfindungsgemäßen Belüftungsvorrichtung 1 nicht in Betrieb ist, wird durch den zweiten Lüftungskanal 13 keine Außenluft über den Wärmetauscher 21 in das Rauminnere geführt. Gleichzeitig gelangt kühlere Außenluft durch den zweiten Lüftungskanal 13' unter Einfluss des in Betrieb befindlichen ersten Lüftungselements 30 über den Wärmeaustauscher 31 in das Innere des Raums. Da auch das erste Lüftungselement 30' im erfindungsgemäßen Betrieb der erfindungsgemäßen Belüftungsvorrichtung 1 nicht in Betrieb ist, wird durch den ersten Lüftungskanal 12' auch keine Luft aus dem Rauminneren über den Wärmetauscher 31 nach außen abgeführt, so dass kein signifikanter Energieaustausch zwischen dem Luftstrom im zweiten Lüftungskanal 13' und der Luft im ersten Lüftungskanal 12' erfolgt. Dementsprechend bleibt die niedrigere Temperatur der kühleren Außenluft beim Durchströmen des zweiten Lüftungskanals 13' im Wesentlichen erhalten, so dass die Luft im Inneren des Raums abgekühlt wird. Auf diese Weise wird ein effektives Abkühlen der Luft im Inneren des Raums erzielt.

Ein entsprechender erfindungsgemäßer Betrieb der erfindungsgemäßen Belüftungsvorrichtung 1 kann analog auch dadurch erfolgen, dass bei einer Temperatur der Außenluft in der Umgebung des Raums unterhalb der Temperatur der Luft im Inneren des Raums durch das Steuerelement 40 das erste Lüftungselement 30 und das zweite Lüftungselement 20' abgeschaltet werden. Für die dann aktiven und ruhenden Luftströme gilt Entsprechendes.

Dieser erfindungsgemäße Betrieb der erfindungsgemäßen Belüftungsvorrichtung 1 kann solange erfolgen, bis die Temperatur der Außenluft in der Umgebung des Raums die Temperatur der Luft im Inneren des Raums erreicht oder bis ein über das ein Bedien- und Anzeigefeld 24 einstellbarer und im dem Steuerelement 40 gespeicherter Wert der Raumtemperatur erreicht ist.

Durch den erfindungsgemäßen Betrieb der erfindungsgemäßen Belüftungsvorrichtung 1 kann auch ein Absenken der Luftfeuchtigkeit im Inneren des Raums bewirkt werden, sofern die Luftfeuchtigkeit außen niedriger ist als die im Raum. In solchen Fällen kann daher ein Abschalten des erfindungsgemäßen Betriebs auch dann erfolgen, wenn ein über das ein Bedien- und Anzeigefeld 24 einstellbarer und im dem Steuerelement 40 gespeicherter Mindestwert der Luftfeuchtigkeit im Raum erreicht ist.

Die erfindungsgemäße Belüftungsvorrichtung 1 umfasst weiter einen Datenspeicher, der in der beschriebenen Ausführungsform in das Steuerelement 40 integriert ist. Durch den Datenspeicher können die von den Sensoren ermittelten Klimakennwert der Umgebungsluft und/oder der Raumluft, z.B. Temperatur und Luftfeuchtigkeit, und/oder mindestens ein Betriebsparameter, z.B. die Uhrzeit und Dauer des erfindungsgemäßen Betriebs, erfasst und gespeichert werden. Auf diese Weise kann der effektive Betrieb der erfindungsgemäßen Belüftungsvorrichtung bequem überwacht oder überprüft werden.

Sollen mehrere Räume durch den erfindungsgemäßen Betrieb der erfindungsgemäßen Belüftungsvorrichtung 1 belüftet werden, ist ein Raumluftverbund zu gewährleisten. Das bedeutet, dass mehrere Räume beispielsweise über offene Türen und/oder durch geeignete passive oder aktive Strömungskanäle derart verbunden sind, dass eine relativ ungehinderte Strömung der Luft zwischen den verschieden Räumen erfolgen kann.

Die Erfindung wurde vorangehend exemplarisch unter Bezugnahme auf die in den Figuren dargestellte Ausführungsform der vorliegenden Erfindung im Detail erläutert. Es versteht sich jedoch, dass der Fachmann auf dieser Offenbarung weitere Ausführungen der vorliegenden Erfindung erkennt, ohne den Schutzbereich der beigefügten Ansprüche zu verlassen.

## Patentansprüche

1. Verfahren zum Betrieb einer Belüftungsvorrichtung (1) mit mindestens einem ersten Lüftungskanal (12, 12'), in dem mindestens ein erstes Lüftungselement (20', 30') angeordnet ist und in dem mindestens ein erster Wärmetauscher (21, 31) zumindest teilweise angeordnet ist, und mindestens einem zweiten Lüftungskanal (13, 13'), in dem mindestens ein zweites Lüftungselement (20, 30) angeordnet ist, und in dem mindestens ein zweiter Wärmetauscher (21, 31) zumindest teilweise angeordnet ist, wobei der mindestens eine erste Lüftungskanal (12, 12') und der mindestens eine zweite Lüftungskanal (13, 13') jeweils dazu ausgebildet sind, einen Luftaustausch zwischen dem Raum und einer äußeren Umgebung vorzunehmen,
**dadurch gekennzeichnet, dass**
mindestens eines der ersten Lüftungselemente (20', 30') derart betrieben wird, dass Luft aus dem Raum durch mindestens einen der ersten Lüftungskanäle (12, 12') unter Passieren des mindestens einen ersten Wärmetauschers (21, 31) in die äußere Umgebung transferiert wird, während gleichzeitig mindestens eines der zweiten Lüftungselemente (20, 30) derart betrieben wird, dass Luft aus der äußeren Umgebung durch den mindestens einen zweiten Lüftungskanal (13, 13') unter Passieren des mindestens einen zweiten Wärmetauschers (20, 30) in den Raum transferiert wird, wodurch eine Absenkung einer Raumtemperatur des Raums bewirkt wird
oder
mindestens eines der zweiten Lüftungselemente (20, 30) derart betrieben wird, dass Luft aus dem Raum durch mindestens einen der zweiten Lüftungskanäle (13, 13') unter Passieren des mindestens einen zweiten Wärmetauschers (21, 31) in die äußere Umgebung transferiert wird, während gleichzeitig mindestens eines der ersten Lüftungselemente (20', 30') derart betrieben wird, dass Luft aus der äußeren Umgebung durch den mindestens einen ersten Lüftungskanal (12, 12') unter Passieren des mindestens einen ersten Wärmetauschers (21, 31) in den Raum transferiert wird, wodurch eine Absenkung einer Raumtemperatur des Raums bewirkt wird.

2. Verfahren nach Anspruch 1, **dadurch gekennzeichnet, dass** zumindest ein Klimakennwert einer Umgebungsluft und/oder einer Raumluft erfasst wird, der zur Steuerung der ersten Lüftungselemente (20', 30') und/oder der zweiten Lüftungselemente (20, 30) nutzbar ist.

3. Verfahren nach Anspruch 2, **dadurch gekennzeichnet, dass** anhand des zumindest einen Klimakennwerts eine relative Luftfeuchtigkeit und/oder ein Taupunkt der Umgebungsluft und/oder der Raumluft berechnet wird.

4. Verfahren nach einem der Ansprüche 1 bis 3, **dadurch gekennzeichnet, dass** eine Verringerung einer Luftfeuchtigkeit in dem Raum bewirkt wird.

5. Verfahren nach einem der Ansprüche 1 bis 4, **dadurch gekennzeichnet, dass** der mindestens eine erste Wärmetauscher (20, 30) und/oder der mindestens eine zweite Wärmetauscher (20, 30) als Wärmerekuperatoren ausgebildet sind/ist.

6. Belüftungsvorrichtung zur Belüftung mindestens eines Raums, umfassend mindestens einen ersten Lüftungskanal (12, 12'), in dem mindestens ein erstes Lüftungselement (20', 30') angeordnet ist und in dem mindestens ein erster Wärmetauscher (21, 31) zumindest teilweise angeordnet ist, und mindestens einen zweiten Lüftungskanal (13, 13'), in dem mindestens ein zweites Lüftungselement (20, 30) angeordnet ist und in dem ein zweiter Wärmetauscher (21, 31) zumindest teilweise angeordnet ist, sowie ein Steuerelement (40),
**dadurch gekennzeichnet, dass**
das Steuerelement (40) zumindest dazu vorgesehen ist, mindestens eines der ersten Lüftungselemente (20', 30') derart zu betreiben, dass Luft aus dem Raum durch den mindestens einen ersten Lüftungskanal (12, 12') unter Passieren des mindestens einen ersten Wärmetauschers (21, 31) in die äußere Umgebung transferiert wird, und gleichzeitig mindestens eines der zweiten Lüftungselemente (20, 30) derart zu betreiben, dass Luft aus der äußeren Umgebung durch den mindestens einen zweiten Lüftungskanal (13, 13') unter Passieren des mindestens einen zweiten Wärmetauschers (21, 31) in den Raum transferiert wird, um eine Absenkung einer Raumtemperatur des Raums zu bewirken
oder
das Steuerelement (40) zumindest dazu vorgesehen ist, mindestens eines der zweiten Lüftungselemente (20, 30) derart zu betreiben, dass Luft aus dem Raum durch den mindestens einen zweiten Lüftungskanal (13, 13') unter Passieren des mindestens einen zweiten Wärmetauschers (21, 31) in die äußere Umgebung transferiert wird, und gleichzeitig mindestens eines der ersten Lüftungselemente (20', 30') derart zu betreiben, dass Luft aus der äußeren Umgebung durch den mindestens einen ersten Lüftungskanal (12, 12') unter Passieren des mindestens einen ersten Wärmetauschers (21, 31) in den Raum transferiert wird, um eine Absenkung einer Raumtemperatur des Raums zu bewirken.

7. Belüftungsvorrichtung nach Anspruch 6, **dadurch gekennzeichnet, dass** diese weiter eine Sensoreinheit umfasst, welche mindestens dazu vorgesehen ist, mindestens einen Klimakennwert einer Umgebungsluft und/oder einer Raumluft zu erfassen, der von der Steuerelement (40) zur Steuerung und/oder Regelung der ersten Lüftungselemente (20', 30') und/oder der zweiten Lüftungselemente (20, 30) nutzbar ist.

8. Belüftungsvorrichtung nach Anspruch 6 oder Anspruch 7, **dadurch gekennzeichnet, dass** das Steuerelement (40) mindestens dazu vorgesehen ist, anhand des zumindest einen Klimakennwerts eine relative Luftfeuchtigkeit und/oder einen Taupunkt der Umgebungsluft und/oder der Raumluft zu berechnen.

9. Belüftungsvorrichtung nach einem der Ansprüche 6 bis 8, **dadurch gekennzeichnet, dass** die Beüftungsvorrichtung (1) in einen Fenster- und/oder Türrahmen integriert ist.

10. Belüftungsvorrichtung nach Anspruch 9, **dadurch gekennzeichnet, dass** der mindestens eine erste Lüftungskanal (12, 12') und der mindestens eine zweite Lüftungskanal (13, 13') in Form von Profilhohlkammern von den Fenster- und/oder Türrahmen bildenden Profilen ausgebildet ist.
